# EUROPEAN PATENT APPLICATION

(11) **EP 1 282 053 A1**
(43) Date of publication of application: **05.02.2003**
(21) Application number: 00963067.4
(22) Date of filing: 03.10.2000
(51) Int. Cl.: G06F 17/60

(54) **STOCK SELLING/PURCHASING SYSTEM AND STOCK SELLING/PURCHASING METHOD**

(30) Priority: 10.03.2000 JP 2000065882; 18.08.2000 JP 2000248555
(71) Applicant: Shouken Fund Co., Ltd., Tokyo 103-0025 (JP)
(72) Inventor: KUSU, Hiroshi, Chuuou-ku Tokyo 103-0025 (JP)
(74) Representative: Strehl Schübel-Hopf & Partner
(86) International application number: JP0006868
(87) International publication number: WO01067321

(57) **Abstract**

A stock selling/purchasing system (5) comprising a financing institute (1) that has means for storing therein the amount of own fund of the purchaser, means for storing therein the amount of accommodation of fund to the purchaser, means for calculating the interest on the accommodation, means for calculating the total market value of the stock, means for calculating the gross amount of accommodation from the amount of accommodation and the interest, means for calculating the stock maintenance ratio from the gross amount of accommodation and the total market value, means for storing therein the target stock maintenance ratio, and means for displaying information when the stock maintenance ratio exceeds the target stock maintenance ratio, a purchaser terminal (2), and a communication network (3) for interconnecting them. A stock selling / purchasing method using the system is also provided.

## Description

### BACKGROUND ART

The present invention relates to a stock selling/purchasing system and a stock selling/purchasing method to sell and purchase the stock by accommodating a stock purchaser with a purchase fund.

### PRIOR ART

As one example of a stock trade to sell and purchase a stock by accommodating a stock purchaser with a purchase fund, there is one dealing system like a credit dealing to gain the stock. This type of dealing system is performed in such a manner that an investor borrows a stock purchase fund from a security firm to purchase the socks exceeding own fund.

Since credit dealing is carried out within a predetermined period, the investor sells off the stock purchased within this term, and appropriates the obtained price for loan money.

A stock price is always fluctuated in not only the case such as a credit dealing, but also in the dealing such that a financing institute accommodates a stock purchaser with a purchase fund to sell and purchase the stock. Accordingly, both the purchaser and the financing institute wear a risk. For example, when a stock price is dropped, the purchaser not only receives a deficit, but also sometimes needs to increase a pledge against the financing institute. Furthermore, depending on the case, payment of loan money becomes difficult, and it lapses into the state such that loan money is unrecoverable for the financing institute.

However, in order to restrain aforementioned risk to the minimum as much as possible, it is necessary to always observe the trend of a stock market, to calculate the profit and loss obtained by trades each time, and to accurately determine a timing of the stock trade. As a conventional method, a timing of selling and purchasing the stock was determined based on both an observation of stock price and a calculation of the profit and loss in such a manner that both the purchaser and the financing institute are contacting with each other.

In the meantime, the stock trade by using Internet has recently been appeared. Therefore, the purchaser can sell and purchase the stock by observing stock price information on real-time. However, it is necessary to individually perform a precise calculation of the profit and loss for reducing the risk as a conventional way.

Accordingly, a stock selling/purchasing system has never been appeared until now so as to observe the stock price and to calculate the profit and loss on real-time for making it possible for confining the risk to the minimum as much as possible when the stock price is dropped.

In the aforementioned dealing system, both the purchaser and the financing institute were accompanied by the potential risk. Therefore, a system and method of selling and purchasing the stock has been required to realize in such a manner that the risk was minimized as much as possible to be able to maintain a reliable dealing. Specifically, an object has been seeking to offer a stock selling/purchasing system and a stock selling/purchasing method in such a manner that the profit and loss for a fluctuation of the stock price of the purchase brand can always be calculated for accurately making a judgement of the stock trade, additionally, even though when the stock price is dropped, the amount of loss for the purchaser can be confined to a predetermined value for allowing at least loan money to be recoverable for the financing institute.

### SUMMARY OF THE INVENTION

The main object of the present invention is to provide the stock selling/purchasing system and stock selling/purchasing method capable of solving the aforementioned drawbacks, of neutralizing a profit and loss for both the purchaser and the financing institute, and of reducing a risk.

First of all, the stock selling/purchasing system with regard to the present invention comprises, means for storing the amount of own fund to store the amount of accommodation of fund, means for storing the amount of accommodation of fund to store the amount of accommodation fund to the purchaser, means for calculating the interest to calculate the interest on the accommodation fund, means for calculating the total market value of the stock to calculate the total market value of the stock, means for calculating the gross amount of accommodation to calculate the gross amount of accommodation from the amount of accommodation and the calculated interest, means for calculating the maintenance ratio to calculate the maintenance ratio for every brand by subtracting the total market value of the stock from the total amount of accommodation, means for storing the target maintenance ratio to store the target maintenance ratio predetermined in accordance with the stock brand, and means for displaying information to display information when the maintenance ratio exceeds the target maintenance ratio.

According to the stock selling/purchasing system of the present invention, the necessary data can be displayed such that the maintenance ratio exceeds more than the target maintenance ratio (sometimes called "invariable multiplication") when the stock price of the purchase brand is dropped and / or interest is skyrocketed. The displaying of exceeding maintenance ratio makes it possible for the purchaser and the financing institute or the like to rapidly take a countermeasure such that the stock is sold.

Hereupon, for example, the stock selling/purchasing system can be comprised in such manner that when a maintenance ratio is more than 100 %, the stock trade is displayed and the financing institute or other institutes nominated by the financing institute purchase the stock from the purchaser. Accordingly, a loss price of the purchaser deserves an own fund so that the purchaser can prevent amount of loss price from being exceeded more than amount of own fund.

Therefore, if the target maintenance ratio is predetermined to less than 100% of value in advance, the purchaser can restrain the maximum amount of a loss from being exceeded the amount of own fund. Additionally, for example, the financing institute urges the purchaser to sell the stock so that sale price can be appropriated for recovery of lone money.

However, the stock selling/purchasing system can also be comprised in such a manner that even though when a maintenance ratio is more than 100 %, the purchaser can continuously possess the stock for latter cases that the stock price may be skyrocketed. Herein, a maintenance ratio is a ratio of an estimated price for a market value of the stock and is also called "multiplication". A maintaining ratio is evaluated by subtracting a total market value of purchase brand from a gross amount of accommodation (the amount of principal and interest of accommodation).

Secondarily, the-stock selling/purchasing system with regard to the present invention is characterized in that said target maintenance ratio is predetermined so as to be a large value for a brand having a large numbex of stock trades, while said target maintenance ratio is predetermined so as to be a small value for a brand having a small number of stock trades.

According to this stock selling/purchasing system, a profitable line can be provided in accordance with each brand. At the same time, even though the stock price of a purchase brand is dropped, a stock can be sold for latter cases. Specifically, the brand having a small number of stock trades in a stock market is hardly concluded for dealing. Therefore, the stock can hardly be sold, while there is a case such that a stock price is further dropped and a loss is increased. Accordingly, a target maintenance ratio of the aforementioned brand having a small number of stock trades is predetermined as a small value in advance to cope with the risk such that the stock can hardly be sold.

Thirdly, the stock selling/purchasing system with regard to the present invention is comprised of an automatic-sale maintenance storing method to store the automatic selling maintenance ratio predetermined in accordance with a brand of the aforementioned stock, and an automatic selling method to automatically sell the aforementioned stock when said maintenance ratio is more than said automatic selling maintenance ratio.

According to this stock selling/purchasing system, the stock is rapidly and automatically sold when the maintenance ratio is more than a predetermined value (the automatic selling maintenance ratio). The purchaser can confirm an amount of loss at this time for preventing the loss from being more increased. Additionally, a troublesome work such as making a phone call regarding the stock trade between the purchaser and the financing institute can be eliminated for enhancing a working efficiency of the stock trade.

Fourthly, the stock selling/purchasing system with regard to the present invention is also characterized in that said stock are sold and purchased for a bundle of plural brands.

According to this stock selling/purchasing system, both the purchaser and the financing institute can grasp not only an individual profit and loss of every purchase brand, but also a whole or optional unit profit and loss of purchase brand. Consequently, trades can flexibility be made in accordance with a market trend or funds.

Fifthly, the stock selling/purchasing system with regard to the present invention is also characterized in that an information being confined to at least a brand of said stock as well as a balance sheet disclosing said total amount of accommodation and said total market value can be examined by said purchaser through Internet.

According to this stock selling/purchasing system, the purchaser can gain a detailed information of the stock price regarding the purchase brand, an accommodation information including a borrowing interest, and an information regarding a profit and loss respectively on real-time. Thereby, the purchaser can gain more convenient service. Furthermore, a troublesome phone call between the purchaser and the financing institution as well as a trouble caused by the phone call can be reduced.

Seventhly, the stock selling and purchasing system with regard to the present invention is also characterized in that only personal ID is described on said balance sheet as information for specifying one person.

According to this stock selling/purchasing system, even though a third party of the general public except for both the purchaser and the financing institute accesses to a Web site established on Internet, it is not specified who the purchaser is. Thereby, the information regarding the purchaser is confined to the personal ID to protect the privacy of the purchaser. Consequently, the purchaser can use the stock selling/purchasing system in comfort.

Eighthly, the stock selling/purchasing system with regard to the present invention is also comprised of a selling/purchasing method such that said stock is sold when said maintaining ratio is more than predetermined value.

According to this stock selling/purchasing system, the financing institute or other institutes nominated by the financing institute purchase the stock when the stock price of a purchase brand is dropped. A predetermined value is set so as to be same value as the target maintenance ratio or larger value of the target maintenance ratio. For example, the predetermined value is set as more than 100 %, the financing institute or other institute nominated by the financing institute purchase the stock when a stock selling price is less than a total amount of accommodation. Accordingly, the purchaser will never lose more than amount of own fund so as to prevent a risk from being expanded when the stock price is dropped or the interest is increased.

Ninthly, the stock selling/purchasing method with regard to the present invention by using aforementioned stock selling/purchasing system is comprised of a first step that the financing institute accommodates the stock purchaser, a second step that said financing institute deposits the stock purchased by said purchaser as pledge, a third step that said financing institute or said purchaser sells said stock, and a fourth step that when said selling price is less than amount of the accommodation or the accommodation including the interest, the balance is appropriated as the loss of said financing institute.

According to this stock selling/purchasing method, the stock purchaser can receive accommodation from the financing institute as a shortage of price when the stock purchaser purchases the stock by more than amount of own fund. Specifically, when a selling price purchased by the purchaser is less than amount of the accommodation or the accommodation including the interest, the deduction is paid by the financing institute. The purchaser can restrain the maximum amount of a loss from being exceeded own fund. Consequently, the stock trade can be performed with a guaranty for loss.

Furthermore, the stock is sold in two cases. One is the case where the financing institute sells the stock under the agreement of the purchaser. The other one is the case where the purchaser sells the stock under the agreement of the financing institute The loss caused by selling the stock at this time deserves the loss of the financing institute. Herein, the stock selling price is a market value.

Tenthly, the stock selling/purchasing method with regard to the present invention is comprised of a step such that said financing institute and third party perform an optional dealing for a price reduction of said stock.

According to the stock selling/purchasing method, for example, the financing institute performs an optional dealing for a price reduction of Japan-economic average by a part of interest received from the purchaser. Herein, the optional dealing is system such that one stock is sold and purchased by a predetermined price within a certain term in the feature under the condition of selling/purchasing "right of purchase (call-option)" and "right of sale (put-option)". When the stock price is expected to skyrocket in the feature, a call option may be bought or a put option may be sold. On the other hand, when the stock price is expected to drop in the feature, a call option may be sold or a put option may be bought.

Accordingly, even the stock selling price purchased by the purchaser is less than amount of the accommodation or the accommodation including interest due to a drop of the stock price, the loss of the financing institution can be reduced to make up for the loss of the purchaser as long as the financing institute secures a profit gained by the optional dealing of the stock price reduction.

Tenthly, the stock selling/purchasing method with regard to the present invention is comprised of a step that an accommodation frame is provided in said stock for every brand in accordance with a number of trade in the stock market, and a step that said financing is performed in accordance with the financing frame.

According to the stock selling/purchasing method, a brand having a small number of stock trades in the stock market can hardly sell the stock when the stock price is dropped. Therefore, for example, if the accommodation frame for the purchaser is shrunk in advance, the risk can be predictable. On the other hand, a brand having a large number of stock trades in the stock trade can freely perform the stock trade by expanding the accommodation frame. Herein, the number of the stock trade can be appropriately determined based on an average number of such as past one month, three months, half a year.

### BRIEF DESCRIPTION OF THE DRAWINGS

Fig.1 is a schematic structural view of the stock sale and purchase system.
Fig.2 is a block structural view of a business computer in the stock sale and purchase system.
Fig.3 is a theoretical structural view of the stock sale and purchase.
Fig.4 is an update processing flow chart of the stock sale and purchase.
Fig.5 is a flow chart of utilizing the stock sale and purchase.
Figs.6 is a balance sheet
Figs.7 is one embodiment of a balance sheet.
Figs.8 is a flow chart indicating a flow of the stock sale and purchase.
Figs.9 is an explanatory view indicating a flow of money in the stock sale and purchase.
Figs. 10 is one example of a passbook
Figs.11 is one example of a report of the stock selling and purchasing.
Figs.12 is a flow chart of a compendium for depositing a security.

### BEST MODES FOR CARRYING OUT THE INVENTION

Embodiments of the stock selling/purchasing system with regard to the present invention will be described in detail with reference to accompanied drawings.

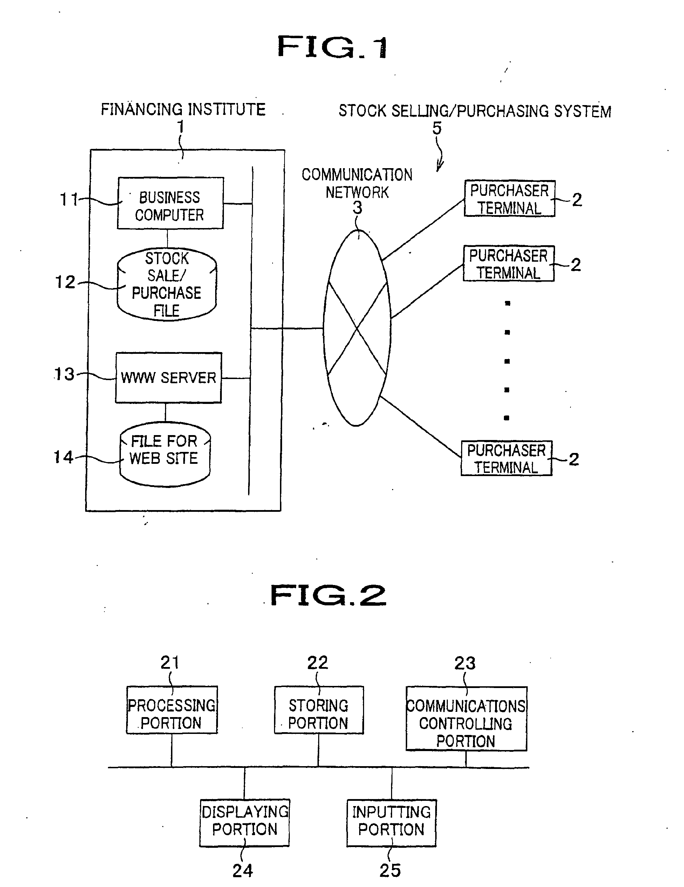

First of all, a schematic structure of the stock selling/purchasing system with regard to the present invention is described with reference to Fig.1. As shown in Fig.1, the stock selling/purchasing system is comprised of a financing institute 1, a purchaser terminal 2, and a communication network 3 for connecting said financing institute 1 and said purchaser terminal 2.

Herein, the financing institute 1 is an institute for accommodating the purchaser with a purchase fund to purchase the stock. Additionally, the financing institute 1 is commissioned by the purchaser to sell and purchase the stock under the condition of a nude contract only. Furthermore, the financing institute 1 sometimes commissions a security firm to sell and purchase the stock. The purchaser pays money as a down payment of own fund to the financing institute 1 for requesting the financing institute 1 to purchase the stock. Then when the financing institute 1 pays a purchased price to a security firm, the amount of price subtracting said paid down payment (an own fund of the purchaser) from said purchased price is accommodated to the purchaser. When the financing institute 1 accommodates the purchaser with said subtracted price, the financing institute 1 deposits the stock certificate received from a security firm in pledge. The financing institute 1 establishes Web Site such that the purchaser can examine an information of accommodation and an information of a profit and loss on Internet.

Herein, the financing institute 1 is comprised of a business computer 11 and WWW sever 13. Furthermore, the business computer 11 includes a stock sale/purchase file 12., while WWW sever 13 includes a file 14 for Web Site respectively.

The purchaser terminal 2 is a terminal used by the purchaser who purchase the stock by receiving a purchase fund from the financing institute 1 to purchase the stock. The purchaser operates the purchaser terminal 2 to gain the information of an accommodation and the information of a profit and loss regarding a purchase brand by accessing WWW server 13 of the financing institute 1 via a communication network 3.

Next, the business computer 11 of the financing institute 1 is described with reference to Fig.2. The business computer 11 is a computer to generate and renew a stock sale/purchase file 12. As shown in Fig.2, The business computer 11 is comprised of a process portion 21, a storing portion 22, a communication control portion 23, displaying portion 24, and inputting portion 25.

Herein, the process portion 21 is to perform a calculation process for each case. The storing portion 22 is to store an information for each case. The communication control portion 23 is to perform a connection process with the commutation network 3. The display portion 24 is to display an inputting operations or the like of each kinds of the information on the screen, and is to display the required information on the screen for printing out when a maintainance ratio is more than value of a target maintenance ratio. The inputting portion 25 is to input each kind of information.

The business computer 11 generates and renew the stock sale/purchase file 12 in the storing portion 22 by calculating the information of the purchaser, a finance, and a stock price. Herein, the information of purchaser and the accommodation is stored in the storing portion 22 via the inputting portion 25. On the other hand, the information of the stock price is gained from an outside information providing institutes (not shown) via the communication controlling portion 23 and the communication network 3. The storing portion 22 comprehends an inside-storing device (storing) and an outside-storing device (hard desk or the like) in the business computer 11.

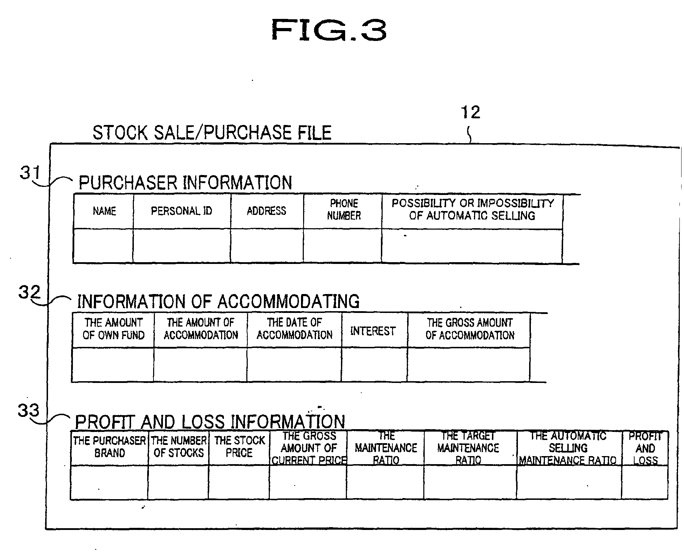

Next, the theoretical structure of the stock sale/purchase file 12 is described with reference to Fig.3. As shown in Fig.3, the stock sale/purchase file 12 is comprised of the-purchaser information 31 for the purchaser, the accommodation-information 32 for the purchaser, the profit and loss information 33 for the purchaser brand. The purchaser information 31 is the information of name, personal ID, adders, phone number, possibility or not of automatic sale with regard to the purchaser. The accommodation information 32 is the information of an own fund, an accommodation, date of accommodation, interest, total amount of accommodation. Furthermore, the profit and loss information 33 is the information of such as a purchase brand, a number of stock, a stock price, total market value, a maintenance ratio, a target maintenance ratio, an automatic selling maintenance ratio, a profit and loss.

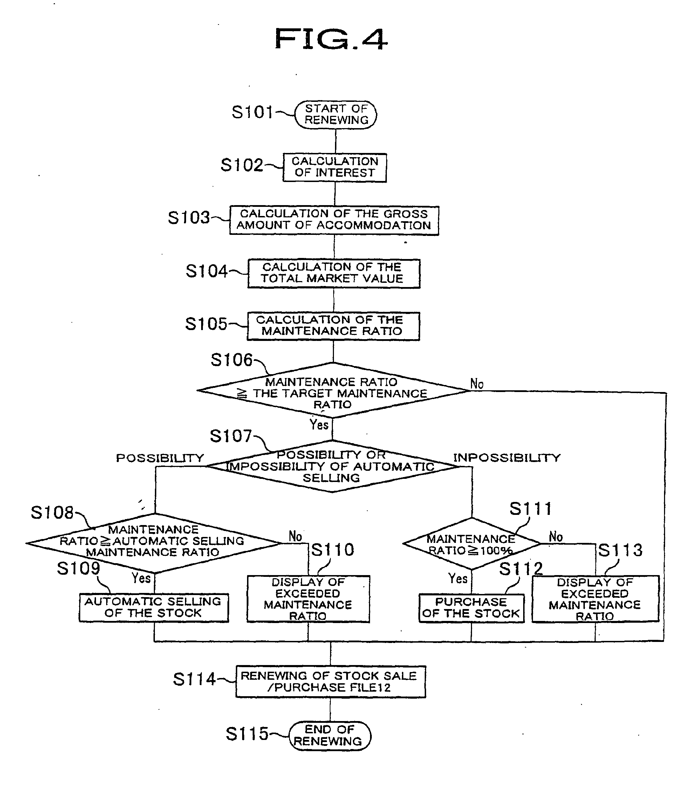

Next, a renewing process of the stock sale/purchase file 12 is described with reference to Fig.4. As shown in Fig.4, when the stock sale/purchase file 12 is required to begin renewing (Step 101), the business computer 11 calculates an interest in the process portion 21 under the condition that date of accommodation is an initial day of calculation (Step 102). Then, total amount of accommodation is calculated in such a way that interest calculated in step 102 is added to the accommodation fund (Step 103). Then, the total market value is calculated in such a way that a number of stock is multiplied by the stock price information provided from outside information providing institute (not shown) via the communication controlling portion 23 and the commutation network 3 (Step 104). Then, a maintenance ratio is calculated in such a way that total market value calculated in step 104 is subtracted from a total amount of accommodation calculated in step 103 (Step 105). Herein, the maintenance ratio calculated in step 105 is compared with a target maintenance ratio stored in the storing portion 22 (Step 106). At this time, when the maintenance ratio is more than amount of a target maintenance ratio, the following process is divided in two steps based on the data whether automatic sale is possible or not (Step 107).

When it is possible to be automatically sold ("possible"), a maintenance ratio is compared with the automatic selling maintenance ratio stored in the storing portion 22 (Step 108). At this time, when the maintenance ratio is more than the automatic sale maintenance ratio the stock is automatically sold (Step 109). The automatic sale is a system such that the processing portion 21 in the business computer 11 automatically orders the stock sale/purchase computer (not shown) of a security firm to sell the stock via the communication controlling portion 23 and the communication network 3. At this time, the loss price of the purchaser is evaluated for preventing the loss from being expanded. When the maintenance ratio is less than amount of the automatic a selling maintenance ratio, the maintenance ratio extremely exceeded more than target ratio is displayed on the displaying portion 24 (Step 110) so as to take early countermeasure. On the other hand, when it is impossible to be automatically sold ("impossible"), a judgement is made whether the maintaining ratio is 100 % or not (Step 111). If the maintaining ratio is more than 100 %, instruction for purchasing the stock is displayed on the displaying portion 24. At the same time, the financing institute 1 or other institutes nominated by the financing institution 1 purchase the stock form the purchaser (Step 112). This causes the loss price of the purchaser to be confined within an own fund so that the purchaser can prevent the loss from being expanded to more than the own fund. If the maintenance ratio is less than 100 %, the maintenance ratio exceeded more than target ratio is displayed on the displaying portion 24 (Step 113) so as to take early countermeasure.

The contents of the stock sale/purchase file 12 are rewritten under the condition that these calculation processing results are the latest information (Step 114) to terminate renewing a processing of the stock sale/purchase file 12 (Step 115).

Herein, when the maintenance ratio is more than the amount of the target value, the financing institute 1 can list up suitable information including such as results of automatic sale on the displaying portion 24 for printing out, can write said suitable information on the following balance sheet 40, and can automatically inform said suitable information to the purchaser via E-mail. Specifically, WWW sever 13 is set so as to have a mail sever function to store a personal ID and E-mail address of the purchaser. Then a personal ID and the suitable information are transmitted from the business computer 11 to WWW sever 13. At this time, if E-mail address corresponding to the personal ID exists in WWW sever 13, E-mail is automatically transmitted to the purchaser having this address.

Still more, the operational program for instructing the requirement to start renewing of the stock sale/purchase file 12 (Step 101) is constituted in following ways. The requirement to start renewing of the stock sale/purchase file 12 (Step 101) is automatically performed synchronizing with the reception of the stock price information from outside information providing institute (not shown) provided via the communication network 3, is automatically performed in a predetermined date, and is performed by the service requirement from the purchaser terminal 2 or/and the input operation from the inputting operation 25 of the business computer 11.

The interest, a number of the stocks, the accommodation fund, the target maintenance ratio, and the automatic selling maintenance ratio are stored in the storing portion 22 of the business computer 11 with the information of the own fund or the like. Therefore, means for storing the amount of own fund, means for storing the amount of accommodation, means for storing the target maintenance ratio, means for storing the automatic selling maintenance ratio are provided on the storing portion 22.

Furthermore, the operational program to perform rewriting processing of each calculating process, the displaying process, the automatic selling process and the stock sale/purchase file 12 is stored in the storing portion 22. The rewriting processing is performed in the processing portion 21. Therefore, means for calculating the interest, means for calculating the total market value, means for calculating the total amount of accommodation, means for calculating a maintenance ratio, a means for automatically selling, means for purchasing are provided on the processing portion 21.

Herein, the displaying method to display the suitable information is performed by the displaying portion 24 when the maintainance ratio is more than the target ratio.

The target maintenance ratio is comprised in such manner that arbitrary numerical values can be stored in the storing portion 22 via inputting operation of the business computer 11. Specifically, the target maintenance ratio is set up large for the brand having a large number of stock trades. On the other hand, the target maintenance ratio is set up small for the brand having a small number of stock trades.

From the viewpoint of loss generating prevention of the both sides of the purchaser and the financing institute 1, the maintaining target value is set up to less than 100%. Herein, the target maintenance ratio can be individually determined for every brands. However, for example, it is also possible to define said target maintenance ratio in such manners that it sets to 91% uniformly to the brand of a first section market of the stock market, it sets to 88% uniformly to the brand of a second section market of the stock market, and it sets to 91% uniformly to the shop front brand of a first section market of a stock market. Accordingly, the aforementioned method to set the target maintaining ratio for every kinds of the market allows the processing of the stock sale/purchase system to be simplified so that a storing in the calculation processing is efficiently available.

The automatic sale maintaining ratio is comprised in such a manner that arbitrary numerical values can be stored in the storing portion 22 via inputting operation of the business computer 11. The automatic selling maintenance ratio is the value such that the purchaser sets up beforehand the maximum loss when the stock price is dropped, and said ratio is set up to more than the target maintenance ratio and less than 100%. The purchaser selects whether the automatic sale is possible or not at the time of contract, and determines the automatic selling maintenance ratio in the case that automatic selling is possible.

Furthermore, the operational program is constructed in such a manner that calculation processing of the financing information and the profit-and-loss information regarding these stock sale/purchase can be performed not only for every individual brand but also for a bundle of every two or more brands by an inputting-operation of the inputting portion 25 of the purchaser terminal 2 or the business computer 11. Thereby, the stock sale/purchase can be performed. These systems are of the mode such that the stock sale/purchase can be performed not only for every individual brand but also for a bundle of every two or more brands

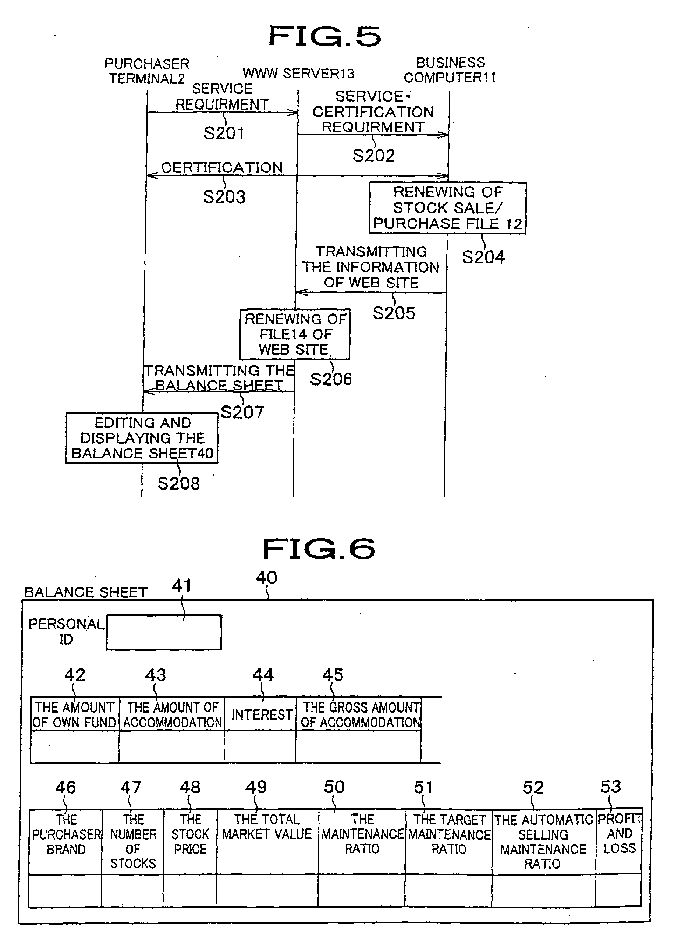

Next, one method will be described with reference to Fig.5. This is the method that the financing information and the profit-and-loss information regarding these stock sale/purchaser are provided to the purchaser as the balance sheet via Internet. Fig.5 is a flow chart regarding a utilization of the stock sale/purchase system 5. First of all, the purchaser inputs a personal ID and a password into the purchaser terminal 2 for accessing to Web site of WWW server 13 for requiring a service (Steo201). When WWW server 13 receives a service requirement form the purchaser terminal 2. WWW server 13 asks the business computer 11 for the service demand of the purchaser and the attestation processing demand about the purchaser (Step202). The business computer 11 compares the personal ID and the password contained in the service demand data transmitted from the purchaser terminal 2 with the personal ID and the password beforehand registered into the storing portion 22 (Step 203). Only when both comparison results are in correspondent, the business computer 11 regards it as a service demand of a regular purchaser, and performs a renewing processing to rewrite the stock sale/purchase file 12 to the latest state (Step204). However, This renewing processing is omitted such as when the stock sale/purchase file 12 is renewed synchronizing with reception of the stock price information from the outside information providing institute (not shown) acquired through the communication network 3.

The business computer 11 transmits only the information to WWW server 13 (Steo205). Herein, this information is described in the balance sheet 40 being provided to the purchaser, and is one of the information stored in the stock sale/purchaser file 12 by which a renewing processing was carried out.

WWW server 13 edits the information indicated on the balance sheet 40 transmitted from the business computer 11 in HTML style to generate and renew as the file 14 for Web Site (Step206). Sequentially, WWW server 13 transmits the balance sheet 40 to the purchaser terminal 2 in HTML style (Step207). The purchaser terminal 2 includes a browsing function therein for translating HTML style information transmitted from WWW server 13 to display on the screen. The balance sheet 40 is displayed on the screen by the browsing function (Step208). According to this procedure, the purchaser can reference the balance sheet 40 shown in Fig.6 on the screen of the purchaser terminal 2

Next, the balance sheet 40 will be described with reference to Fig.6. The balance sheet 40 in Fig.6 indicates at least a purchaser brand 46, a total amount of accommodation 45, a total market value 49. These are a part of the information regarding the stock sale/purchase stored in the stock sale/purchase file 12. Additionally, an own fund 42, an accommodation fund 43, an interest 44, a number of the stocks 48, a stock price 48, a maintenance ratio 50, a target maintenance ratio 51, an automatic selling maintenance ratio 52, a profit and loss 53, a profit and loss when selling off now or the like may be indicated on the balance sheet 40.

The balance sheet 40 can be made not only for every individual brand, but also for a bundle of every two or more brands.

Furthermore, the information regarding the purchaser described in the balance sheet 40 is only a personal ID 41. Specifically, the business computer 11 transmits only the personal ID 41, but not transmit the information regarding a name and an address when the information described in the balance sheet 40 is transmitted to WWW server 13 after the business computer 11 generates and renews the stock sale/purchase file 12. Accordingly, it is impossible to specify the purchaser.

Still more, a security system (not shown in the present embodiment) including a device having a Fire Wall function such as Router is provided between the communication network 3 and the business computer 11 and between the business computer 11 and WWW server 13.

Herein, the stock selling/purchasing system 5 of the present embodiment has been described as a theoretical structure such that the business computer 11 is independently provided from WWW server 13. However, another structure can be made in such a manner that the business computer 11 and WWW server 13 are provided on one device as Hardware.

At the same time, according to the stock selling/purchasing system 5 of the present invention, WWW server 13 is stored in the financing institute 1. However, another method is available such that WWW server 13 is used as a server of outsider's Internet provider (not shown).

Additionally, a theoretical structure of the stock sale/purchase file 12 and the balance sheet 40 or the like are not confined to a structure described in figurers so that other structures can be available.

Next, the operation of the stock selling/purchasing system 5 constituted in the aforementioned way will be explained with reference to Fig.1 through Fig.7. First of all, the purchaser makes the contract regarding a stock trade with the financing institute 1 by using a teller of the financing institute 1 or Internet. The financing institute 1 delivers a personal ID and a password being used at the time of using Internet to the purchaser when the financing institute makes contract. Herein, the personal ID and the password is unique number respectively. When the personal ID and the password are registered in the storing portion 22 of the business computer 11 of the financing institute 1, the purchaser can use the stock selling/purchasing system 5 at this time.

Additionally, the purchaser can select whether the automatic sale is possible or impossible at the time of contracting to registrar "possible" or "impossible" in the storing portion 22. Then, the automatic selling maintenance ratio is determined for registration when a selected result is "possible".

When the purchaser gains the information of accommodation or the profit-and-loss information by using the stock selling/purchasing system 5, the purchaser accesses to Web site of WWW server 13 of the financing institute 1 from the purchaser terminal 2 to perform a service requirement by inputting the personal ID and the password. Then, when WWW server 13 receives the service requirement from the purchaser terminal 2, WWW server 13 makes a request to the business computer 11 for performing the recognition processing about the purchaser and the service requirement of the purchaser. At this time, the personal ID and the password contained in a service requirement data transmitted from the purchaser terminal 2 are compared with the personal ID and the password beforehand registered in the storing portion 22 with each other by the business computer 11. Only when both comparison results are in correspondent, the business computer 11 regards it as a service demand of a regular purchaser, and begins to perform a renewal processing to rewrite the stock sale/purchase file 12 to the latest state.

The business computer 11 calculates the interest, the gross amount of accommodation, the total market value, and the maintenance ratio in following way respectively. The interest is calculated in the processing portion 21 under the condition that date of accommodation is an initial day of calculation. The total amount of accommodation is calculated in such a way that interest is added to the amount of accommodation. The total market value is calculated in such way that a number of stock is multiplied by the stock price information provided from outside information providing institute (not shown) via the communication controlling portion 23 and the commutation network 3. The maintenance ratio is calculated in such a way that the total market value is subtracted from the total amount of accommodation. Sequentially, the business computer 11 rewrites the contents stored in the stock sale/purchase file 12 to the aforementioned calculation processing result as the latest information for completing a renewing process.

Furthermore, the business computer 11 transmits only a predetermined information to WWW server 13. Herein, the predetermined information is described in the balance sheet 40 being provided to the purchaser, and is one of the information stored in the renewed stock sale/purchaser file 12.

WWW server 13 edits the information described on the balance sheet 40 transmitted from the business computer 11 as HTML style to generate and renew as the file 14 for Web Site. Sequentially, WWW server 13 transmits the balance sheet 40 to the purchaser terminal 2 as HTML style. The purchaser terminal 2 uses a browsing function stored therein to translate HTML style information transmitted from WWW server 13 for displaying the balance sheet 40 on the screen.

Still more, after the maintenance ratio-calculation process is performed by the business computer 11, when the maintenance ratio exceeds the target maintenance ratio, an exceeded maintenance ratio is displayed on the displaying portion 24 of the business computer 11. Similarly this exceeded maintenance ratio is displayed also on the balance sheet 40 being transmitted to the purchaser terminal 2. At this time, the next countermeasure such as selling the stock can be rapidly taken by the purchaser and the financing institute 1 or the like. Consequently, a risk can be reduced in such case that the stock price is dropped.

Herein, for example, when the maintenance ratio exceeds more than 100 %, an instruction for purchasing the stock is displayed so that the financing institute 1 or other institutes dominated by the financing institute 1 purchase the stock from the purchaser. This causes the loss price of the purchaser to be confined within the own fund so that the purchaser can prevent the loss from being expanded to more than the own fund.

Furthermore, when the purchaser regards the automatic sale as "possible", the stock is automatically sold when the maintenance ratio exceeds the automatic sale maintenance ratio. The automatic sale is a system such that the processing portion 21 in the business computer 11 automatically orders the stock sale/purchase computer (not shown) of a security firm to sell the stock via the communication control portion 23 and the communication network 3. At this time, the loss price of the purchaser is evaluated for preventing the loss from being expanded.

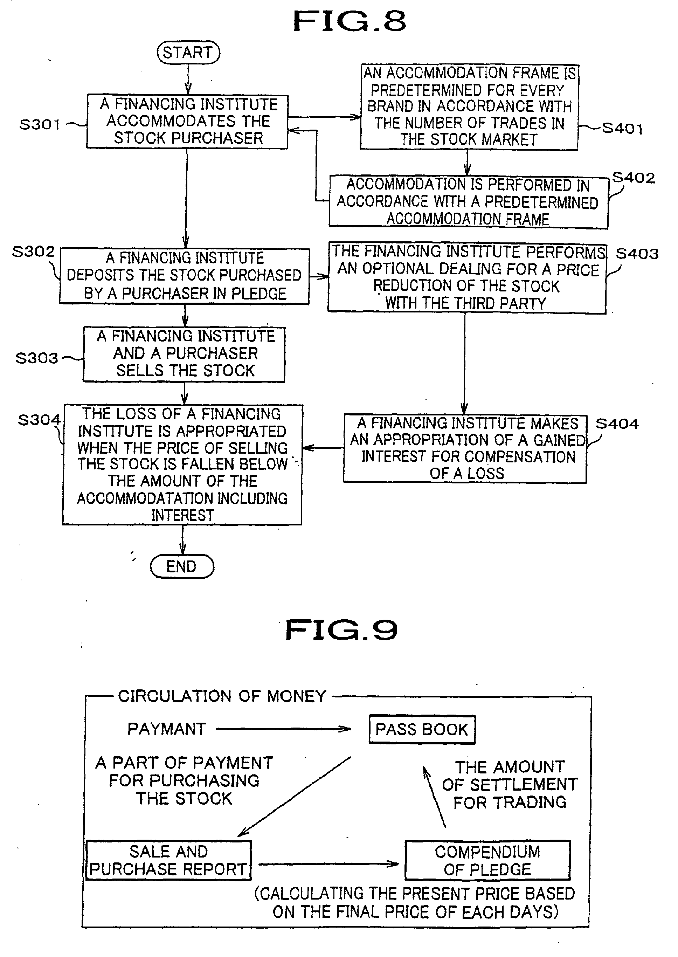

Next, the stock selling/purchasing method using aforementioned selling and purchasing system 5 will be explained with reference to Fig.8. Fig.8 is a flow chart indicating the process of the stock selling and purchasing.

In Fig.8, when the stock purchaser purchases the stock by the amount of more than own fund, the financing institute 1 makes up for shortage (Step 301). At this time, the accommodation frame is determined in accordance with the number of trades in the stock market (Step 401) so that the storage is appropriated based on the accommodation frame. (Step 402). A brand having a small number of stock trades can hardly sell the stock when the stock price is dropped. Accordingly, for example, if accommodation frame for the purchaser is shrunk in advance, the risk is predictable. On the other hand, a brand having a large number of stock trades can freely perform the stock trade by expanding the accommodation frame.

Sequentially, the financing institute 1 deposits the stock purchased by the purchaser in pledge (Step302). At this time, the financing institute 1 can perform an optional dealing for a price reduction of said stock with the third party (Step 403). This is a method such that an optional dealing for a price reduction of Nikkei average is performed by assuming that the stock price is expected to drop in the feature. For example, the financing institute 1 can purchase Put Option (the right to purchase the stock) with a part of interest received from the purchaser.

Then, for example, when the price of stocks purchased by the purchaser is continuously dropped, the stock in pledge is sold by the financing institute 1 or the purchaser under the condition of receiving an agreement of a partner (Step 3). At this time, when the selling price is less than the amount of accommodation including a total amount of the interest, the financing institute 1 pays the difference for making up for the shortage (Step 304). At the same time, the financing institute 1 can appropriate the interest gained by the optional dealing for price reduction shown in Step 403 for the loss (Step 404).

### (Example of embodiment 1)

Next, one embodiment of the stock selling/purchasing system 5 will be explained with reference to Fig.1 through Fig.7 respectively. A schematic structure of the stock selling/purchasing system 5 is indicated in Fig.1. A block structure of the business computer 11 of the financing institute 1 is indicated in Fig.2. A theoretical structure of the stock selling/purchasing file 12 is indicated in Fig.3. A flowchart for renewal processing of the stock selling/purchasing file 12 is indicated in Fig.4. A flowchart for utilization of the selling/purchasing system 5 is indicated in Fig.5.

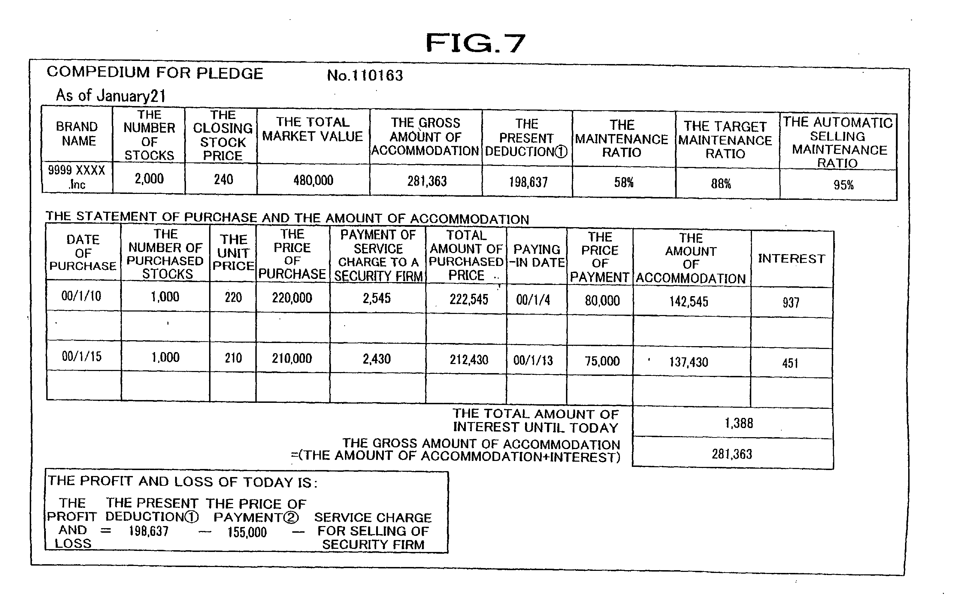

When the purchaser inputs the personal ID and the password into the purchaser terminal 2 for accessing to Web site of WWW server 13, the purchaser can reference the balance sheet 40. Herein, one example of embodiment regarding the balance sheet 40 is shown in Fig.7

In Fig.7, the personal ID is only information to specify the purchaser so as to be described as " 110163". This is the number delivered by the financing institute 1 to the purchaser when making a contract.

The brand name is the information to specify the stock brand such that following a brand code in the stock market, a company name is displayed as "9999 ××××, Inc."

The stocks were purchased two times previously in this example. Particulars of the information regarding the accommodation are described. When the stocks were purchased for the first time, particulars are as follows. The date of purchase is " January 10 ", the number of purchased stock is " 1,000 stocks ", unit price of purchase is " 220 yen ", a price of purchase is " 220,000 yen ", and a payment of service charge to a security of firm is " 2,545 yen". Accordingly, a total amount of purchased price is "222,545 yen ". Herein, the purchaser pays own fund as down payment. A pay-in-date is " January 4 " and the price of payment (2) is " 80,000 yen ". Consequently, the amount of accommodation accommodated by the financing institute 1 is "142,545 yen " wherein the price of payment (2) " 80,000 yen " is subtracted from a total amount of purchased price " 222,545 yen ". Additionally, the interest is " 937 yen " for the amount of accommodation " 142,545 yen ".

Similarly, a purchase of the stock in January 15 for the second time is also described. When the accommodation for the first time and the accommodation for the second time are added with each other, the total amount of interest is " 1,388 yen ", total amount of'accommodation including a total amount of interest is " 281, 363 yen " in January 21.

In the meantime, the information regarding a profit and loss is also described. The total number of stocks in pledges for the first time and second time is " 2,000 yen". The dosing stock price as of January 21 is " 240 yen ". The total market value is " 480,000 yen". The present deduction (1) is " 198,637 yen " wherein the total amount of accommodation " 281,363 yen " is subtracted from said total market value " 480,000 yen ". The maintenance ratio is " 58 % " wherein a total market value" 480,000 yen is subtracted from a total amount of accommodation " 281,363 yen ". Herein, the target maintenance ratio is determined as " 88 % " in advance since said brand is the brand of a second section market.

Still more, the maintenance ratio is less than the target maintenance ratio in the example of this embodiment. However, if the maintenance ratio exceeds the target maintenance ratio, a description is made such that the maintenance ratio is exceeded. At the same time, said information is displayed in also the financing institute 1. Specifically, when the maintenance ratio is more than the target maintenance ratio, a countermeasure such as selling the stock can be taken early to reduce the risk.

Herein, when the maintenance ratio is more than 100 %, the purchase of the stock is displayed so that the financing institute 1 or other institutes nominated by the financing institution 1 purchases the stock from the purchaser. Accordingly, the amount of loss of the purchaser deserves the amount of own fund so that the purchaser can prevent said loss from being exceeded more than own fund.

Furthermore, the automatic selling maintenance ratio is set as 95 % in the embodiment Herein, when the maintenance ratio exceeds 95 %, a security firm is automatically ordered to sell the stock via the communication network 3.

What is more, a profit and loss of today, namely, a profit and loss yielded by selling the stock today is a deduction wherein a total amount of payment (2) for the first time and the second time " 155,000 yen " and " a sale of service charge to a security firm is subtracted from a present deduction (1) " 198,637 yen "

When the purchaser accesses Web Site of the financing institute 1 in this way, a status of depositing the stock certificate, a particular of accommodation, the stock price of today, the profit and loss yielded by selling the stock now can be referenced in a real-time.

### (Example of embodiment 2)

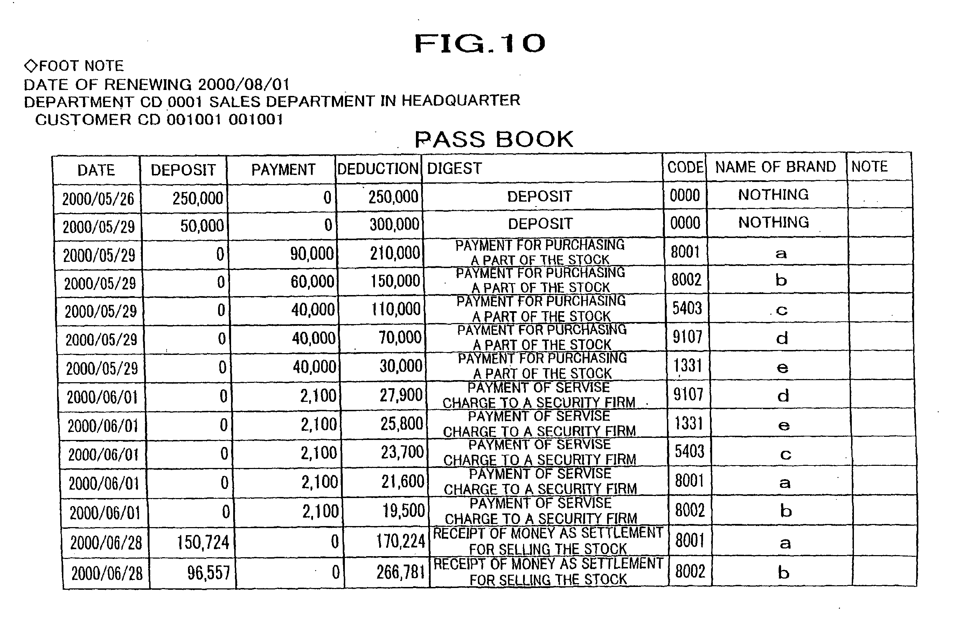

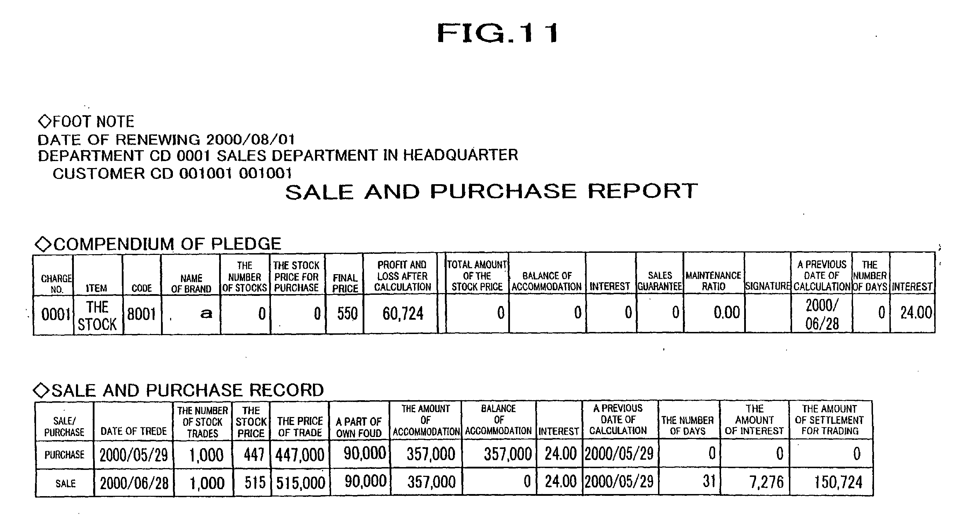

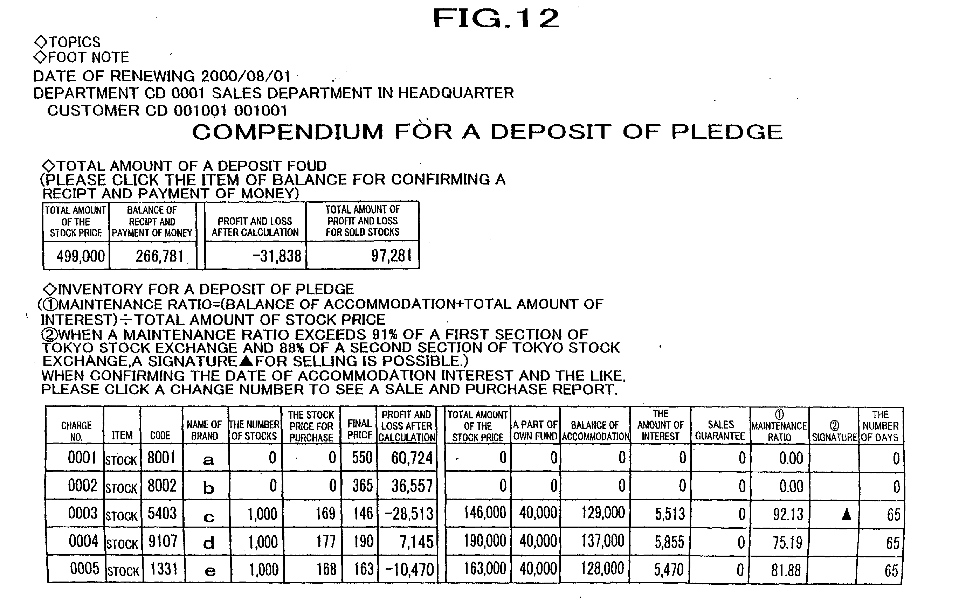

Next, on other embodiment of the stock selling/purchasing system by using aforementioned stock selling/purchasing system 5 will be explained with reference to Fig.9 through Fig.12. Fig.9 is an explanatory view indicating a circulation of money regarding the stock trade. Fig.10 is one example of a passbook. Fig.11 is one example of a sale and purchase report. Fig.12 is one example of a compendium in headquarter. As shown in Fig.9, the financing institute 1 manages the stock trade by three compendiums of "the passbook", "the sale and purchase report" and "the compendium for a deposit of pledge". These compendiums are made for every purchaser so that the contents can be examined on the Internet at any time for 24 hours. When the purchaser references these compendiums, the purchaser inputs the personal ID and the password into the purchaser terminal 2 to access the dealing page only for own Web site. "The passbook" is a compendium for indicating a record of receiving and paying money regarding the stock trade, "the sale and purchasing report" is a compendium for indicating a record of selling and purchasing the stock, and "compendium for a deposit of pledge" is a compendium for indicating a status of depositing the stock in pledge.

According to "the passbook" shown in Fig.10, the purchaser pays money as the own fund of " 250,000 yen " on May 26 and of " 50,000 yen " on May 29. Then, the purchaser pays money for purchasing five brand stocks of a brand a through e in May 29. Accordingly, the deduction (balance) changed to " 30,000 yen ". Sequentially, the deduction changed to " 19,500 yen " in June 1 due to a payment of a service charge to a security firm. After that, the purchaser paid money for selling the stock of the brand a and b on June 28. Consequently, the deduction changed to 266,781 yen".

"Sale and purchase report" of Fig.11 indicates the record of selling and purchasing the brand a on May 29 and June 28. The purchaser purchased " 1,000 stocks " with the stock price of " 447 yen " on May 29. The amount of accommodation is " 357,000 yen " wherein the own fund (payment of a part of money) " 90,000 yen " is subtracted from the purchased price for said brand " 447,000 yen ". After that, the purchaser purchased "1,000 stocks" with the stock price of " 515 yen " on June 28. If the amount of accommodation " 357.000 yen " and the amount of interest " 7.276 ten " are subtracted from this amount of sale " 515, 000 yen " respectively, the amount of settlement for trading will change to " 150,724 yen." Accordingly, the profit and loss of the brand a is " 60.724 yen " wherein the own fund (payment of a part of money) " 90,000 yen " is subtracted from the amount of settlement for trading " 150.724 yen ".

Similarity, any results of the stock trade for other brands are also indicated in " the passbook " and " the sale and purchase report " whenever the trade is executed. Herein, " the compendium for a deposit of pledge" indicates a depositing situation (a property situation) at present time regarding all the brands sold and purchased by the purchaser. Herein, total amount of a profit and loss after calculation ( determined value ) is " 97,281 yen " in " the compendium for a deposit of pledge " shown in Fig.12 since all stocks of the brand a and b are already sold. On the other hand, said profit and loss after calculation with regard to the brand c, d, and e by which the purchaser has, is " -31,838yen ". Herein, a profit and loss after calculation ( determined value ) is evaluated by an equation, wherein (the final value ― the purchased stock price) × the number of stock ― the amount of interest.

The purchaser can peruse a compendium for receiving and paying a money, a record for selling and purchasing, and a depositing status of the stock in pledge in real-time by accessing to Web site of the financing institute 1.

Besides, the present invention is not restricted to aforementioned embodiment or example, but it is widely applied. Additionally, the process of each operation regarding the present invention can appropriately be changed to a manual operation.

### INDUSTRIAL APPLICABILITY

(1) According to the stock selling/purchasing system with regard to the present invention, if the maintenance ratio exceeds the target maintenance ratio when the stock price of the purchased brand is dropped, the purchaser can confine the amount of loss to a predetermined value by taking the countermeasure such as selling the stock. At the same time, the financing institute urges the purchaser to sell the stock so that sale price can be appropriated for recovery of lone money. Consequently, the stock trade can be practical for both the purchaser and the financing institute in such manner that risk can be reduced.
(2) Secondly, the target maintenance ratio is arbitrary determined in accordance with the number of stock trade. Accordingly, the profitable line can be provided in accordance with each brand. At the same time, even though a stock price of a purchase brand is dropped, a stock can be easily sold.
(3) Thirdly, the stock is rapidly and automatically sold when a maintenance ratio is more than a predetermined value (the automatic selling maintainance ratio). The purchaser can prevent the amount of loss from being more increased. Accordingly, a working efficiency of selling the stock can be enhanced.
(4) Fourthly, the profit and loss information of the purchase brand can be freely calculated not only for every individual brand but also for a bundle of plural brands. Accordingly, the purchaser can sell and purchase the stock for not only every individual brand but also for a bundle of plural brands in accordance with a market trend or funds by grasping the profit and loss of a whole or optional unit. Consequently, dealing can be flexibly made.
(5) Fifthly, the purchaser can gain a balance sheet of the purchased brand in a real-time via Internet. Accordingly, the purchaser can judge an appropriate timing of stock trade so as to reduce the risk regarding a loss early when the stock price is dropped.
(6) Sixthly, even though a third party of the general public except for both the purchaser and the financing institute accesses to a Web site established on Internet, it is not specified who the purchaser is. Thereby, the information regarding the purchaser is confined to the personal ID for protecting the privacy of the purchaser. Consequently, the purchaser can use the stock selling and purchasing system in comfort.
(7) Seventhly, the stock is sold if the maintenance ratio exceeds predetermined value when the stock price of the stock brand is dropped. Accordingly, the purchaser can reduce the loss. When the predetermined value is set to more than 100 %, the purchaser will never lose more than amount of own fund so as to prevent the loss from being expanded.
(8) Eighthly, when a sale price of the stock purchased by the purchaser is less than amount of the accommodation or the accommodation including the interest, the balance is paid by the financing institute. Accordingly, the purchaser can restrain the maximum amount of a loss from being exceeded own fund. Consequently, the stock trade can be performed with a guaranty for loss.
(9) Ninthly, since the financing institute and third party perform an optional dealing for a price reduction of the stock, if the purchaser purchases a Put option, the interest is secured even though the stock is dropped. Thereby, the financing institute can make up for the loss, which is paid by the financing institute when the stock price is dropped.
(10) Tenthly, an accommodation frame is determined for every brand in accordance with the number of stock trades in the stock market to accommodate based on the accommodation frame. Especially, when the accommodation frame is shrunk for the brand having a small number of the stock trades, it is possible to predict the risk such that the stock can hardly be sold. On the other hand, a brand having a large number of stock trades can freely perform the stock trade by expanding the accommodation frame.

## Claims

1. A stock selling/purchasing system to sell and purchase the stock, wherein the financing institute accommodates the stock purchaser with a purchase fund, comprising;
means for storing the amount of own fund to store the amount of own fund of the purchaser,
means for storing the amount of accommodation to store the amount of accommodation to the purchaser,
means for calculating the interest to calculate the interest on the accommodation,
means for calculating the total market value to calculate the total market value of the stock purchased by the purchaser,
means for calculating the gross amount of accommodation to calculate the gross amount of accommodation for the purchaser from the amount of accommodation and the calculated interest,
means for calculating a maintenance ratio to calculate the maintenance ratio for every brand of the stock by subtracting said total market value from said gross amount of accommodation,
means for storing a target maintenance ratio to store the target maintenance predetermined in accordance with the brand of the stock, and
means for displaying the information when the maintenance ratio exceeds the target maintenance ratio.

2. The stock selling/purchasing system as set forth in claim 1 **characterized in that** the target stock maintenance ratio is set as large value for a brand having a large number of the stock trades, and is set as small value for a brand having a small number of the stock trades

3. The stock selling/purchasing system as set forth in claim 1 or claim 2, comprising;
means for storing an automatic selling maintenance ratio to store the automatic selling maintenance ratio predetermined in accordance with the brand of the stock, and
means for automatic sale to automatically sell the stock when the maintenance ratio exceeds the automatic selling maintenance ratio.

4. The stock selling/purchasing system as set forth in any one of claims 1 through 3 **characterized in that** said stock is sold and purchased for a bundle of plural brands.

5. The stock selling/purchasing system as set forth in any one of claims 1 through 4 **characterized in that** said purchaser can pursue at least information to specify the brand of said stock and a balance sheet describing said gross amount of accommodation and said total market value via Internet.

6. The stock selling/purchasing system as set forth in claim 5 **characterized in that** only personal ID as information to specify the individual is described in balance sheet

7. The stock selling/purchasing system as set forth in any one of claims 1 through 6, comprising;
a means for purchase to purchase said stock when said maintenance ratio exceeds a predetermined value.

8. A stock selling/purchasing method using a stock sale/purchase system as set forth in any one of claims 1 through 7, comprising;
a step that the financing institute accommodates the stock purchaser,
a step that said financing institute deposits the stock purchased by said purchaser in pledge,
a step that said financing institute or said purchaser sells said stock, and
a step that when said sale price is less than the amount of the accommodation or the amount of accommodation including interest, a shortage is appropriated as a loss of said financing institute.

9. The stock selling/purchasing method as set forth in claim 8, further comprising;
a step that said financing institute performs an optional dealing for a price reduction of said stock with a third party.

10. The stock selling/purchasing method as set forth in claim 8 or claim 9, further comprising;
a step that an accommodation frame is predetermined for every brands of said stock in accordance with the number of stocks in the stock market,
a step that said accommodation is performed in accordance with the accommodation frame.
